(19) Europäisches Patentamt
European Patent Office
Office européen des brevets

(11) Publication number: **0 349 126 A2**

# EUROPEAN PATENT APPLICATION

(21) Application number: 89305457.7

(22) Date of filing: 31.05.89

(51) Int. Cl.4: G02B 6/00 , G02B 1/04

(30) Priority: 31.05.88 JP 133189/88

(43) Date of publication of application: 03.01.90 Bulletin 90/01

(84) Designated Contracting States: AT BE CH DE FR GB IT LI NL SE

(71) Applicant: MITSUBISHI RAYON CO., LTD.
3-19, Kyobashi-2-chome Chuo-Ku
Tokyo(JP)

(72) Inventor: Yamamoto, Takashi
3-2-36, Taigenzan Oono-cho
Saeki-gun Hiroshima(JP)

(74) Representative: Stuart, Ian Alexander et al
MEWBURN ELLIS 2 Cursitor Street
London EC4A 1BQ(GB)

## (54) Optical fiber having plastic cladding and process for preparation thereof.

(57) A core-cladding optical fiber having a plastic cladding composed of an amorphous copolymer having a single glass transition temperature of at least 125°C but lower than 140°C is described. The amorphous copolymer comprises (a) units derived from a fluorodioxole represented by the formula [I]:

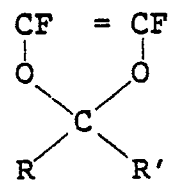

[I]

wherein R and R′ are fluorine or trifluoromethyl,
and (b) units derived from at least one monomer selected from tetrafluoroethylene, chlorotrifluoroethylene, Rf - CF = $CF_2$ (in which Rf is a primary fluoroalkyl group having 1 to 5 carbon atoms) and Rg - OCF = $CF_2$ (in which Rg is a primary fluoroalkyl group having 1 to 5 carbon atoms or a primary fluoroalkyl group having 4 to 12 carbon atoms as a whole and oxygen of an ether bond).

EP 0 349 126 A2

## OPTICAL FIBER HAVING PLASTIC CLADDING AND PROCESS FOR PREPARATION THEREOF

The present invention relates to a polymer-clad optical fiber having a cladding composed of an amorphous fluoroplastic resin having a high single glass transition temperature (hereinafter referred to as "Tg"), and a process for the preparation of this optical fiber.

Plastic-clad optical fibers have an excellent pliability and have been used as light transmission media for optical communication, for example, in the field of factory automation and the field of short-distance communication for vehicles such as automobiles, and as light information transmission media for image display devices using optical fibers, and attempts are now being made to broaden of the range of applications in these fields.

The plastic-clad optical fiber heretofore used as the light information transmission medium in these fields includes a plastic-core plastic-cladding optical fiber comprising a core composed of polymethyl methacrylate, polystyrene or polycarbonate and a cladding composed of a vinylidene fluoride/tetrafluoroethylene copolymer or a fluoroalkyl methacrylate polymer, and a glass-core plastic-cladding optical fiber comprising a glass-core and the above-mentioned plastic cladding. Nevertheless, since the Tg of the fluoroplastic resin constituting the cladding in these optical fibers in low, i.e., below 90 °C, if the optical fiber is exposed to a hot atmosphere maintained at a temperature higher than 90 °C, structure failures occur in the interface between the cladding and core of the optical fiber, the light transmission attenuation in the optical fiber is increased, and the optical fiber ceases to act as a light information transmission medium. Accordingly, an expansion of the utilization of optical fibers in the above-mentioned fields is hindered.

The development of core-cladding optical fibers having a good heat resistance has been attempted; for example, U.S. Patent No. 4,350,569 discloses a core-cladding optical fiber comprising a cladding composed of a binary copolymer derived from perfluoro-2,2-dimethyl-1,3-dioxole represented by the following formula [II]:

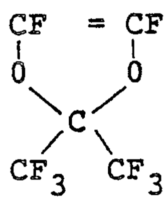

[II]

and tetrafluoroethylene, or a terpolymer derived from these two monomers and another comonomer.

The copolymers specifically disclosed in this U.S. patent comprise the perfluoro-2,2-dimethyl-1,3-dioxole in an amount of up to 56.9 mole%, and it is taught that the glass transition temperature of these copolymers is 119 °C at highest. Accordingly, this copolymer is not suitable for the cladding material of an optical fiber having a beat resistance higher than 120 °C. Moreover, the light transmission attenuation in the optical fiber is large.

The present inventors investigated the cause of this problem, and as a result obtained the following findings. First, the copolymers of perfluoro-2,2-dimethyl-1,3-dioxole and tetrafluoroethylene prepared in the examples of the above-mentioned U.S. patent, had low glass transition temperatures up to 119 °C, and this leads to a low heat resistance. Secondly, the copolymers obtained in Examples 3 through 10 of the U.S. patent have two to four glass transition temperatures (hereinafter referred to as "Tg") as determined by the differential scanning calorimetry (hereinafter referred to as "DSC") according to the method of ASTM D-3418, and this leads to an increase of the light transmission loss attenuation. More specifically, the copolymer of the dioxole of the formula [II] and tetrafluoroethylene, prepared in Example 4 of U.S. Patent No. 4,530,569, has four Tg's of 74 °C, 82 °C, 122 °C and 124 °C. It is further reported that the Soxhlet extraction of this copolymer with 1,1,2-trichloro-1,2,2-trifluoroethane gave three polymer fractions having Tg's of 70 °C, 92 °C and 93 °C, respectively.

It is assumed that the polymer disclosed in the above U.S. patent is a block copolymer or a mixture of a plurality of polymers, and since the polymer does not have an amorphous structure, the transparency is not high, and an optical fiber comprising this polymer as the cladding exhibits a large light transmission loss, low heat resistance, poor shape stability and poor chemical resistance.

Preferred embodiments of the present invention can provide a polymer-clad optical fiber having an excellent heat resistance and good light transmission characteristics.

In one aspect of the present invention, there is provided a core-cladding optical fiber having a plastic cladding, wherein the cladding component is composed of an amorphous copolymer having a single glass transition temperature of at least 125° C but lower than 140° C, said amorphous copolymer comprising (a) units derived from a fluorodioxole represented by the following formula [I]:

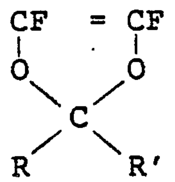

[I]

wherein R and R′ are independently selected from the group consisting of a fluorine atom and a trifluoromethyl group,
and (b) units derived from at least one monomer selected from the group consisting of tetrafluoroethylene, chlorotrifluoroethylene, Rf - CF = $CF_2$ (in which Rf stands for a primary fluoroalkyl group having 1 to 5 carbon atoms) and Rg - OCF = $CF_2$ (in which Rg stands for a primary fluoroalkyl group having 1 to 5 carbon atoms or a primary fluoroalkyl group having 4 to 12 carbon atoms as a whole and an oxygen atom of an ether bond).

In another aspect of the present invention, there is provided a process for the preparation of the above-mentioned optical fiber, which comprises melt-spinning a transparent phastic material as the core component and the above-mentioned amorphous copolymer as the cladding component by a core-sheath conjugate spinning process.

In still another aspect of the present invention, there is provided a process for the preparation of the above-mentioned optical fiber, which comprises the steps of preparing a transparent, fibrous light conductor, and then, the fibrous light conductor is coated with a melt of the above-mentioned amorphous copolymer, or the fibrous light conductor is coated with a solution of the above-mentioned amorphous copolymer in a solvent followed by removal of the solvent from the coated solution.

## DESCRIPTION OF THE PREFERRED EMBODIMENTS

The cladding-forming polymer used in the present invention must have such a heat resistance that the Tg is at least 125° C but lower than 140° C, the polymer must be an amorphous copolymer not having a crystalline structure which is one cause of the reduction of the light transmission characteristics of the optical fiber, the polymer must have a good adhesion at the core-cladding interface of the optical fiber, and the polymer must have a good shape stability.

Among the monomers (b) to be copolymerized with the fluorodioxozole of the formula [I], the monomers of the formula Rf - CF = $CF_2$ include, for example, those which have a perfluoroalkyl group, especially $-CF_3$ as the Rf. The monomers of the formula Rg - 0CF = $CF_2$ include monomers wherein Rg is a perfluoroalkyl group, especially $-CF_3$, $-CF_2CF_2CF_3$, or an oxygen-containing perfluoroalkyl group, such as, for example, perfluoro(methyl vinyl ether), perfluoro(ethyl vinyl ether), and perfluoro(n-propyl vinyl ether).

The cladding-forming copolymer may have units derived from other monomers, as long as the above-mentioned characteristics required for the cladding-forming copolymer are not changed thereby. The monomers used include, for example, vinylidene fluoride, hexafluoropropylene, trifluoroethylene, methylfluoro(4-methyl-3,6-dioxane-8-nonenoate) and a perfluoroalkylethylene having 1 to 8 carbon atoms in the alkyl group.

A homopolymer of the dioxozole represented by the formula [I] has a high Tg, but the heat resistance thereof is not satisfactorily high. Moreover, the dioxozole is difficult to polymerize, a polymer having a broad molecular weight distribution is readily formed, and the moldability of the polymer is poor. Copolymerization for a formation of a copolymer having a high copolymerization ratio of the dioxozole represented by the formula [I] is difficult, and the heat resistance of this copolymer is not satisfactory although the Tg is high.

In contrast, an amorphous copolymer having a Tg of at least 125° C but lower than 140° C is suitable as the cladding-forming polymer having a high Tg and a good heat resistance.

In the amorphous copolymer constituting the cladding component, the proportion of the units (a) derived from a flurodioxole of the formula [I], the units (b) derived from tetrafluoroethylene, chlorotrifluoroethylene, Rf - CF = $CF_2$ and Rg - OCF = $CF_2$, and the units (c) derived from an optional monomer copolymerizable with the monomers for the units (a) and (b) must be selected so that the amorphous copolymer has a glass

transition temperature of at least 125°C but lower than 140°C. The glass transition temperature (Tg) of the amorphous copolymer has the relationship, expressed by the following equation, with the proportion of the units (a) of the fluorodioxole, the units (b), and the unit (c) of the optional conomer.

$$\frac{1}{Tg} = \frac{M_a}{Tg_a} + \frac{M_b}{Tg_b} + \frac{M_c}{Tg_c}$$

wherein Tg: glass transition temperature of the amorphous copolymer,
$Tg_a$: glass transition temperature of homopolymer of the fluorodioxole of the formula [I],
$Tg_b$: glass transition temperature of homopolymer of the monomer for the units (b),
$Tg_c$: glass transition temperature of homopolymer of the optional monomer for the units (c),
$M_a$: molar fraction of the units (a) derived from the fluorodioxole of the formula [I],
$M_b$: molar fraction of the units (b), and
$M_c$: molar fraction of the units (c) derived from the optional monomer.

The preparation of the optical fiber of the present invention by using the above-mentioned cladding-forming polymer will now be described. An optical fiber having a plastic core is prepared by the core-sheath conjugate spinning process; the solution coating process in which a fibrous plastic core is coated with a cladding-forming coating solution obtained by dissolving the cladding-forming polymer in a solvent in a clean room and the solvent is then removed by volatilization; the melt coating process in which a fibrous plastic core is coated with a melt of the cladding-forming polymer, for example, by the die coating method; or the tube molding process in which the cladding-forming polymer is shaped into a tube, the core-forming liquid component is filled in this tube, and the core component is cured in this state.

As the core-forming component used when carrying out the present invention, there can be mentioned organic polymers such as polymethyl methacrylate, polystyrene, a methyl methacrylate/phenylmaleimide copolymer, polycarbonate, a bornyl methacrylate polymer, an admantyl methacrylate polymer, a silicone polymer, a fluorosilicone polymer, a cyclohexyl methacrylate polymer, deuterated polymethyl methacrylate, deuterated polystyrene, poly-4-methylpentene-1, a fluoroalkyl methacrylate polymer, an α-fluoroacrylate polymer, a crosslinked acrylic polymer and a polyglutarimide polymer represented by the following formula [III]:

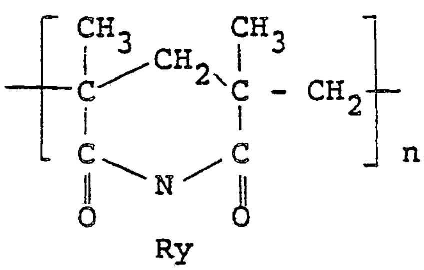

[III]

wherein Ry stands for a group selected from a lower alkyl group, a cycloalkyl group and a phenyl group, and n is an integer,
and inorganic materials such as quartz and glass.

When preparing the optical fiber of the present invention, preferably the core component and the cladding component are selected so that the relationship $n_1 - n_2 \geqq 0.01$ is established between the refractive index $n_1$ of the core component and the refractive index $n_2$ of the cladding component.

When the optical fiber of the present invention is prepared by the core-sheath conjugate spinning process, preferably the melt viscosity at the melt-spinning temperature is lower than 20,000 poise, and if the respective components are selected so that the relationship $[MFR_1] \leqq [MFR_2] \leqq 40$ g/10min is established between the melt flow rates $[MFR_1]$ and $[MFR_2]$ of the core component and cladding component, respectively, as measured under a load of 5 kg, an optical fiber having a truly circular sectional shape and good light transmission characteristics can be obtained.

Since the optical fiber of the present invention comprises a cladding composed of an amorphous copolymer having a single Tg of at least 125°C but lower than 140°C and a specific structure, the optical fiber of the present invention has a good heat resistance, and excellent light transmission characteristics, mechanical properties, and chemical resistance.

The present invention will now be described in detail with reference to the following examples.

Example 1

A stainless steel polymerization vessel having a volume of 500 ml was charged with 270 g of 1,1,2-trichloro-1,2,2-trifluoroethane, 33.2 g of perfluoro-2,2-dimethyl-1,3-dioxozole and 0.5 g of perfluoropropionyl peroxide. The polymerization vessel was sealed and cooled to -50°C, and a stirrer and a thermometer were attached to the polymerization vessel. The atmosphere of the polymerization vessel was replaced three times with nitrogen gas, and 7.6 g (0.076 mole) of tetrafluoroethylene was charged in the polymerization vessel.

The mixture in the polymerization vessel was stirred by rotating the stirrer at a rotation speed of 180 rpm, and the mixture was maintained at a temperature of 50 to 55°C under the autogeneous pressure for 5 hours.

When the polymerization vessel was cooled to room temperature, a polymerization reaction mixture in the form of a white slurry was obtained in the polymerization vessel. The solvent was removed from the obtained polymerization reaction mixture at room temperature under a reduced pressure to obtain a solid polymer. The solid polymer was dried at 110°C under a reduced pressure for 60 hours.

From the results of DSC of the obtained polymer, it was found that the polymer had a refractive index (n2) of 1.30 and a single Tg of 134°C, and the primary transition temperature indicating the presence of a crystal was not observed.

This polymer was dissolved in perfluoro(2-butyl-tetrahydrofuran) ("FC-75", trade name, supplied by 3M) so that the solid concentration was 15% by weight whereby a cladding-forming solution was prepared.

Polymethyl methacrylate having a refractive index ($n_1$) of 1.49 was supplied to a head of a spinning machine, spun, taken up at a speed of 5 m/min, and drawn at 135°C at a draw ratio of 2.0 by a non-contact type hot air drawing machine to obtain a core fiber having a core diameter of 980 microns.

This core fiber was immersed in the cladding-forming solution, taken up at a speed of 5 m/min, and dried by hot air to obtain a core-cladding optical fiber having an outer diameter of 1,000 microns.

When the light transmission attenuation of the obtained optical fiber was measured at a wavelength of 650 nm, it was found that the light transmission attenuation was 380 dB/km. This optical fiber was wound by 100 turns on a rod having a diameter of 10 mm, and when the light transmission attenuation was measured in the same manner as described above, it was found that the light transmission efficiency was 89%.

Example 2

A quartz glass fiber (refractive index $n_1$ = 1.46) having a diameter of 200 microns was prepared as the core component. The surface of this quartz core fiber was coated with the cladding-forming solution prepared in Example 1, by the dip-coating method, and the coated fiber was dried to obtain a core-cladding optical fiber having an outer diameter of 220 microns.

When the light transmission attenuation at 850 nm of this optical fiber was measured, it was found that the light transmission attenuation was 15 dB/km. This optical fiber was exposed at 125°C for 200 hours and, when the light transmission attenuation was measured in the same manner as described above, it was found that the light transmission attenuation was 17 dB/km, and it was confirmed that the optical fiber had a good heat resistance.

Example 3

A bisphenol A-type polycarbonate (refractive index $n_1$ = 1.59) having a viscosity average molecular weight of 25,000 and an $MFR_1$ of 6 was supplied to a vented core-sheath conjugate spinning apparatus and fed to a spinning head maintained at 250°C through a gear pump maintained at 230°C while maintaining a barrel of the spinning apparatus at 270°C and a barrel of the extrusion zone at 240°C, and simultaneously, the dry polymer having an $MFR_2$ of 25 prepared in Example 1 was melted and fed to the spinning head. Thus, a core-sheath conjugate spinning was carried out, and the spun fiber was wound at a speed of 5 m/min to obtain an optical fiber having a core diameter of 980 microns and a cladding thickness of 10 µm.

The light transmission attenuation at 770 nm of the obtained optical fiber was 1,580 dB/km. The optical fiber was heat-treated at 125°C for 100 hours and, when the light transmission attenuation was similarly

measured, it was found that the light transmission attenuation was 1,700 dB/km.

The optical fiber was allowed to stand in an atmosphere maintained at a temperature of 85°C and a relative humidity of 95% for 100 hours and, when the light transmission attenuation was similarly measured, it was found that the light transmission attenuation was 1,610 dB/km.

Example 4

A quartz glass fiber having a diameter of 200 microns was passed through a die coating apparatus to which a melt of the polymer prepared in Example 1, which was maintained at 250°C, was supplied, to obtain a core-cladding optical fiber having an outer diameter of 500 microns.

The light transmission attenuation at 850 nm of this optical fiber was 35 dB/km. When the optical fiber was allowed to stand in a hot air thermostat tank maintained at 150°C for 200 hours and, when the light transmission attenuation was similarly measured, it was found that the light transmission attenuation was 38 dB/km.

## Claims

1. A core-cladding optical fiber having a plastic cladding, wherein the cladding component is composed of an amorphous copolymer having a single glass transition temperature of at least 125°C but lower than 140°C, said amorphous copolymer comprising (a) units derived from a fluorodioxole represented by the following formula [I]:

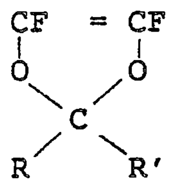

[I]

wherein R and R′ are independently selected from the group consisting of a fluorine atom and a trifluoromethyl group,
and (b) units derived from at least one monomer selected from the group consisting of tetrafluoroethylene, chlorotrifluoroethylene, Rf - CF = $CF_2$ (in which Rf stands for a primary fluoroalkyl group having 1 to 5 carbon atoms) and Rg - OCF = $CF_2$ (in which Rg stands for a primary fluoroalkyl group having 1 to 5 carbon atoms or a primary fluoroalkyl group having 4 to 12 carbon atoms as a whole and an oxygen atom of an ether bond).

2. A core-cladding optical fiber according to claim 1, wherein the relationship $n_1 - n_2 \geqq 0.01$ is established between the refractive index $n_1$ of the core component and the refractive index $n_2$ of the cladding component.

3. A process for the preparation of a core-cladding optical fiber having a plastic cladding, which comprises melt-spinning a transparent plastic material as the core and an amorphous copolymer as the cladding component by a core-sheath conjugate spinning process, wherein the amorphous copolymer has a single glass transition temperature of at least 125°C but lower tan 140°C, and comprises (a) units derived from a fluorodioxole represented by the following formula [I]:

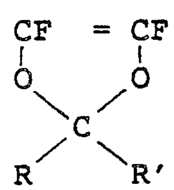

[I]

wherein R and R are independnetly selected from the group consisting of a fluorine atom and a trifluoromethyl group,
and (b) units derived from at least one monomer selected from the group consisting of tetrafluoroethylene, chlorotrifluoroethylene, Rf - CF = $CF_2$ (in which Rf stands for a primary fluoroalkyl group having 1 to 5

carbon atoms) or a primary fluoroalkyl group having 4 to 12 carbon atoms as a whole and an oxygen atom of an ether bond).

4. A process according to claim 3, wherein the core component and the cladding component have a melt viscosity lower than 20,000 poise at the melt-spinning temperature, and the relationship $[MFR_1] \leq [MFR_2] \leq 40$ g/cm$^2$ is established between the melt flow rates $[MFR_1]$ and $[MFR_2]$ of the core component and cladding component, respectively, as measured under a load of 5 kg.

5. A process for the preparation of a core-cladding optical fiber having a plastic cladding, which comprises the steps of preparing a transparent, fibrous light conductor, and then, coating the fibrous light conductor with a melt of an amorphous copolymer or with a solution of the amorphous copolymer in a solvent followed by removal of the solvent from the coated solution; said amorphous copolymer having a single glass transition temperature of at least 125° C but lower than 140° C and comprising (a) units derived from a fluorodioxole represented by the following formula [I]:

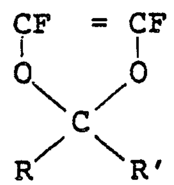

[I]

wherein R and R′ are independnetly selected from the group consisting of a fluorine atom and a trifluoromethyl group,
and (b) units derived from at least one monomer selected from the group consisting of tetrafluoroethylene, chlorotrifluoroethylene, Rf - CF = $CF_2$ (in which Rf stands for a primary fluoroalkyl group having 1 to 5 carbon atoms) and Rg - OCF = $CF_2$ (in which Rg stands for a primary fluoroalkyl group having 1 to 5 carbon atoms or a primary fluoroalkyl group having 4 to 12 carbon atoms as a whole and an oxygen atom of an ether bond).